# EUROPEAN PATENT APPLICATION

(11) **EP 3 629 255 A1**
(43) Date of publication of application: **01.04.2020**
(21) Application number: 18197199.5
(22) Date of filing: 27.09.2018
(51) Int. Cl.: G06Q 10/00, G06Q 10/06, G06Q 10/08

(54) **METHOD AND COMPUTER FOR PROVIDING A RAW MATERIAL INPUT**

(71) Applicant: Eurokeg B.V., 1786 RA Den Helder (NL)
(72) Inventor: HANSSEN, Hubert Joseph Frans, 1069 MN Amsterdam (NL); VEENENDAAL, Jan Dirk, 1788 AZ Den Helder (NL)
(74) Representative: De Vries & Metman

(57) **Abstract**

A method is disclosed for providing raw material for input into a manufacturing process for manufacturing at least one type of product. The method comprises obtaining recycle information indicating an amount of the raw material that is obtained by recycling a product of said at least one type. Further, the method comprises, based on the recycle information, determining for a number of used products of said at least one type a total recyclable amount of the raw material. The used products are input into a recycling process. Preferably, said number of used products are and/or will be present at a recycle facility. A further step of the method is, based on the total recyclable amount and based on a required amount of the raw material required as input into the manufacturing process, determining a supplementary amount of the raw material to be input into the manufacturing process. Furthermore, the method comprises providing the determined supplementary amount of the raw material as input into the manufacturing process.

## Description

### FIELD OF THE INVENTION

This disclosure relates to a method for providing a raw material that is input into a manufacturing process and a computer for determining such raw material input.

### BACKGROUND

The fluctuation of both quality and quantity of available raw material that is used as input into a manufacturing process, can impede a factory to reach its full output potential in terms of number of manufactured products and can significantly reduce the efficiency with which involved technical resources are utilized.

One way for addressing such fluctuations is to maintain a buffer of raw material. Preferably, such buffer is large so that large fluctuations can be absorbed and deficits of raw material can be prevented. However, a disadvantage of a large raw material buffer is that it puts a strain on technical resources such as storage space and on means used for handling the raw material buffer. Furthermore, large buffers, especially if they contain perishable materials, are more prone to becoming unusable because of deterioration of the raw material.

Therefore, there is a need in the art for an improved method for providing raw materials as input into a manufacturing process.

### SUMMARY

To that end, a method is disclosed for providing raw material for input into a manufacturing process for manufacturing at least one type of product. The method comprises, based on recycle information indicating an amount of the raw material that is obtained by recycling a product of said at least one type, determining for a number of used products of said at least one type a total recyclable amount of the raw material. The used products are input into a recycling process. Preferably, said number of used products are and/or will be present at a recycle facility. A further step of the method is, based on the total recyclable amount and based on a required amount of the raw material required as input into the manufacturing process, determining a supplementary amount of the raw material to be input into the manufacturing process. Furthermore, the method comprises providing the determined supplementary amount of the raw material as input into the manufacturing process.

The method provides improved control of the raw material stream that is input into a manufacturing process, not least because the method allows to accurately determine how much supplemental raw material should be input into the manufacturing process in addition to raw material obtained through recycling of products that are retrieved after they have been consumed by the end-users. Since the manufacturer produces the products, he knows what kind of materials the product contains and how much of these materials can be obtained by recycling the product. He can therefore accurately predict, based on a number of retrieved products input into the recycling process, how much recycled material will be available for the manufacturing process and at what moment, which allows to accurately determine the amount of supplementary raw material.

Thus, for a part of the total raw material stream required for the manufacturing process, i.e. the part consisting of the recycled material obtained from recycling the used products of said at least one type, fluctuations in quantity will largely be known beforehand, which lessens the need to maintain a buffer for this part of the total raw material stream. The disclosed method thus enables that a buffer need to be sized such that it can absorb the unexpected fluctuations of a part of the raw material stream only, e.g. a part consisting of externally sourced raw material, as opposed to fluctuations of the entire raw material stream that is input into the manufacturing process.

A further advantage of the disclosed method arises when part of the entire input raw material stream is formed by recycled material that has been sourced externally. The quality of such externally sourced material may vary. If the externally sourced material is of too low quality, then additional upgrading steps have to be performed. To illustrate, if the externally sourced materials comprise recycled plastics, the quality may be too low in the sense that the average chain length of the polymers forming the plastics is too short. In such case, the externally sourced materials may need to undergo polycondensation reactions in order to increase the average chain length and upgrade the quality, before the material can be used as input into the manufacturing process. The disclosed method conveniently uses recycled materials of products produced using the manufacturing process. Therefore, the quality of these materials is sufficiently high. Hence, the disclosed method reduces the number of times upgrading steps need to be performed.

The manufacturing process may be suitable for the production of more than one type of product and the recycle information may indicate for each type a recyclable amount of raw material.

The manufacturing process typically requires a plurality of raw materials to be input. It is easily understood that the disclosed method can be applied to any raw material that is input into the manufacturing process and that can be retrieved upon recycling of the manufactured product.

The recyclable amount of the raw material may be the amount that is typically and/or on average obtained by recycling the product.

Preferably, a relatively large percentage, such as 75%, preferably 80%, more preferably 90%, most preferably 95%, of the materials constituting the product is recyclable.

Raw material may be understood to relate to be the bulk material from which a product is made as opposed to semi-finished products, such as reusable parts. In the context of this disclosure, recycling a product may be understood to relate to obtaining the raw material in bulk form, such as granulated plastic, from a product as opposed to obtaining reusable parts of the product by disassembling the product. In a particular example, recycling comprises grinding and/or shredding and/or granulating plastic.

Further, an amount of material may be understood to relate to a quantity of the material in mass and/or volume.

The required amount of raw material required as input may be dictated by production planning.

The supplementary amount of the raw material input into the manufacturing process is obtained through other ways than recycling of the products manufactured with the manufacturing process. To illustrate, the supplementary raw material may be non-recycled material or recycled material that is obtained by recycling other products.

Providing the determined supplementary amount as input into the manufacturing process may comprise depositing the supplementary amount at an area from which raw material is input into the manufacturing process, for example in a storage depot. In case of plastic raw material, inputting the raw material in the manufacturing process may be embodied as transporting plastic granulate into an extruder system or drying system as also described below.

In one embodiment, said raw material is plastic raw material and the manufacturing process outputs plastic containers for liquids, wherein the plastic containers have a liquid holding capacity between 8 and 51 liters.

In one embodiment, the method comprises, based on time information indicative of a time duration of the recycling process, determining for the number of used products at what time the total recyclable amount will be available as input into the manufacturing process. This embodiment further comprises, based on the determined total recyclable amount associated with said determined time and based on the required amount of the raw material required at said determined time as input into the manufacturing process, determining the supplementary amount for said determined time. In this embodiment, the determined supplementary amount is provided at said determined time.

The time duration of the recycling process may indicate a time duration between used products being input into the recycling process and recycled material of these used products being available as input into the manufacturing process.

In one embodiment, the supplementary amount of raw material is provided from a stock of raw material. In this embodiment, the method comprises, based on the determined supplementary amount, determining a target amount of the stock of raw material, e.g. determining the target amount of the stock for said determined time at which the total recyclable amount will be available as input into the manufacturing process.

The stock can advantageously be managed to have optimal size for absorbing unexpected fluctuations. Preferably, the target amount for a particular time is larger than the supplementary amount determined for that time, so that there is always sufficient raw material available as input into the manufacturing process. When the target amount is larger than said supplementary amount, the stock of raw material can function as a buffer of raw material that can absorb unexpected fluctuations in a raw material stream. The target amount may be determined based on a known volatility a raw material stream. In one example, a higher resp. lower volatility of a raw material stream, e.g. of an externally sourced raw material stream that is to be added to the stock of raw material, will lead to a higher resp. lower buffer amount of raw material, wherein buffer amount may be defined as the difference between target amount and supplementary amount of raw material.

Optionally, this embodiment comprises controlling a size of the stock based on the determined target amount, for example by adding raw material to the stock, or by allowing the stock to shrink. The latter step may be performed by taking more raw material out of the stock (as supplementary amount of raw material) than is added to the stock for some time period.

Of course, a plurality of target amounts may be determined for a plurality of future times. Thus, the optimal size for a plurality of future times can be determined and the size of the stock can be controlled accordingly.

In one embodiment, the method further comprises recycling said number of used products in order to obtain the total recyclable amount of raw material and providing the recycled amount of raw material as input into the manufacturing process. This embodiment enables to reduce the environmental impact of the manufacturing process.

In one embodiment, the raw material comprises a plastic, e.g. a thermoplastic, such as polyethylene terephthalate (PET), polypropylene (PP), polyamide (PA), polyethylene (PE).This further reduces the impact on the environment, because it takes centuries for plastic material to break down once discarded.

In one embodiment, the method comprises providing the supplementary amount of material as input comprises based on the determined supplementary amount of raw material, controlling a raw material input device, such as a conveyer, e.g. a pneumatic conveyer system or conveyer belt, for transporting the raw material from a first location to a second location, to provide the supplementary amount of material as input into the manufacturing process. Preferably, the raw material input device is in particular configured to feed the supplementary amount of material into the manufacturing process. The first location may be a storage location where a stock of raw material is stored and the raw material may be input into the manufacturing process at the second location.

A pneumatic conveyer system may comprise means for generating a vacuum or partial vacuum in a container which causes raw material, such as plastic granulate, in the container to flow through a hose line.

The step of transporting plastic raw material to the second location at which the plastic raw material is input into the manufacturing process may be embodied as transporting, optionally using the pneumatic conveyer system mentioned above, plastic granulate into a plastic extruder system configured to heat up and extrude the plastic raw material. In case the plastic granulate is hydrophilic, such as nylon and PET, transporting plastic raw material to the second location may be embodied as transporting the plastic granulate into a drying system configured to dry the plastic granulate.

The at least one type of product may comprise a food container, such as a liquid food container, such as a keg for beer or wine and/or a plastic liquid food container, in particular a plastic keg. The at least one type of product may be a container for liquids as described in WO2011134949A1.

In one embodiment, determining the supplementary amount comprises registering at the recycle facility a number of retrieved used products of said at least one type. This embodiment enables a convenient manner for determining the supplementary amount. Used products, after they have been fully consumed by an end-user, may be retrieved from the end-users and transported to the recycle facility. Upon arrival at the recycle facility, the used products may be registered, for example in the sense that the inbound used products are counted. Hence, the precise number of retrieved used products at the recycle facility can be obtained.

The total recyclable amount of the raw material may then be determined by multiplying the number of used products at the recycle facility with the recyclable amount of raw material per product.

In one embodiment, each manufactured product of a plurality of manufactured products of said at least one type comprises a machine-readable element comprising information that is relatable to the recycle information of the product, such as a type identifier indicating the type of product. This embodiment allows to fully automate the determination of the total recyclable amount upon reading the information from the machine-readable element at the recycle process.

In one embodiment, said machine-readable element comprises a product identifier that individually identifies the product. This embodiment allows to individually register retrieved used products at the recycle facility. Hence, for each individual manufactured product, it can be established whether or not it has been retrieved at the recycle facility and has been or will be recycled appropriately.

In one embodiment, the method comprises, for each manufactured product of a plurality of manufactured products of said at least one type, receiving location information indicating at least one geographical location of the product between manufacture of the product and retrieval of the product at the recycle facility.

Preferably, in this embodiment, each product comprises a machine-readable element comprising a product identifier as described above. This allows to accurately track the location of the product between manufacture and retrieval of the product at the recycle facility.

In an example, after a product has been manufactured, it is shipped to one or more locations, wherein at at least one of these locations the product is consumed. At each of these one or more locations, a computer system comprising a reader for reading the machine-readable element, may read the element and obtain the product identifier of the product and transmit the product identifier to a computer system of the manufacturer together with information that is indicative of the geographical location. This allows the manufacturer to individually track the location of manufactured products between manufacture and retrieval at the recycle facility.

In one embodiment, the method comprises determining the number of used products of said at least one type. This determination step comprises forecasting a number of used products of said at least one type at the recycling process on the basis of said location information received for each product of the plurality of manufactured products of the at least one type.

Typically a manufacturer maintains a stock of raw material as buffer of raw material in order to prevent a deficit due to unexpected fluctuations of raw material supply. This embodiment advantageously allows to predict the amount of supplementary raw material that will be required in the future, which allows to reduce said buffer. Understandably, reducing this buffer reduces the usage of technical resources, such as storage space.

The location information received for a particular product may indicate the geographical location of the product at a particular time. Based on this information, the transportation time for transporting the product from the geographical location to the recycle facility can be determined. Based on this transportation time, the time at which the product arrives at the recycle facility can be forecast. Because such an arrival time can be determined for each product of the plurality of manufactured products, it can be forecast how many used products will be at the recycle facility at what moment.

Thus, the number of used products at the recycle facility may be a predicted number of used products at the recycle facility.

The number of used products of said at least one type at the recycle facility may be forecast to be there at a particular future time that lies before the time at which the total recyclable amount of raw material is required as input into the manufacturing process.

In one embodiment, the method comprises, for each manufactured product of the plurality of manufactured products of said at least one type, receiving consumption information indicating an extent to which the product has been consumed and forecasting a number of used products of said at least one type at a recycling process on the basis of said consumption information.

This embodiment allows to even more accurately forecast the number of used products at the recycle process, which further improves control of the raw material streams. The extent to which the product has been consumed may namely be used to forecast when the entire product will be consumed and ready to be shipped to the recycle facility.

The consumption information for each product may be received repeatedly, e.g. periodically, such as daily or weekly. How the extent to which the product has been consumed has developed over time can also be used to forecast when the entire product will be consumed and ready for shipment to the recycle facility. Thus, based on extended consumption information indicating for a plurality of times an extent to which the product has been consumed, an end-of-consumption time can be forecast at which the product is ready to be transported to the recycle facility. Then, based on the end-of-consumption time and based on the geographical location of each product, the number of products at the recycle process can be forecast for a plurality of time instances. The extended consumption information enables to determine a rate at which the product is consumed.

In one embodiment, the at least one type of product comprises a liquid food container, such as a plastic keg, and the consumption information indicates an amount of liquid food in the liquid food container. In one example, the amount of liquid food in the container may be obtained by weighing the container. A weighing system may repeatedly, for example, hourly, daily or weekly, transmit a weight of the liquid container including an amount of liquid food to a computer system of the manufacturer.

In one embodiment, the method comprises, for each manufactured product of said plurality of manufactured products, based on the location information, determining a parameter indicative of an environmental impact, such as an environmental cost indicator (ECI), associated with shipping the product to and/or from the at least one geographical location and compensating for the environmental impact. This embodiment allows to accurately compensate for the environmental impact associated with shipping the product to and/or from the at least one geographical location.

In one embodiment, determining the environmental impact comprises determining an amount of one or more greenhouse gases emitted as a result of said shipping the product to and/or from the at least one geographical location. In this embodiment, compensating for the environmental impact comprises compensating for the determined amount of one or more emitted greenhouse gases.

This embodiment allows to accurately compensate for the greenhouse gases that are emitted as a result of shipping the manufactured product during a lifecycle of the product.

Examples of greenhouse gases are carbon dioxide (CO₂), methane (CH₄), nitrous oxide (N₂O), perfluorocarbons (PFCs), hydrofluorocarbons (HFCs), and sulphur hexafluoride (SF₆).

Compensating for the amount of emitted greenhouse gases may comprise reforesting land and/or afforesting land and/or collecting and destroying greenhouse gases, such as collecting and destroying combusting methane.

In one embodiment, the method comprises, for each manufactured product of said plurality of manufactured products, based on the location information and based on an amount of recycled material used for manufacturing each product, determining an environmental impact, such as an environmental cost indicator (ECI). This embodiment further comprises determining that the environmental impact for at least one product exceeds a predetermined threshold value. In an example, the embodiment comprises determining an average environmental impact for a plurality of products and determining that this average environmental impact exceeds a predetermined threshold value. This embodiment further comprises, based on said determination, performing at least one of the following steps for reducing an environmental impact associated with the products of said at least one type:
- increasing an amount of recycled material used for manufacturing said products, e.g. by increasing an amount of externally sourced recycled raw material that is provided as at least part of said supplementary amount;
- decreasing a distance between the manufacturing process and said at least one geographical location;
- decreasing a distance between said at least one geographical location and the recycling process;
- decreasing a distance between the recycling process and manufacturing process;
- increasing an amount of waste material, which is not suitable for use in the manufacturing process, that is provided as raw material input for one or more other manufacturing processes;
- increasing a number of products that, after they have served their main purpose, yet before they are recycled, are provided to one or more third parties for use of the products for one or more other purposes.

In one embodiment, the method comprises a processor, preferably a microprocessor, of a data processing system storing in a computer readable storage medium a database comprising a plurality of product identifiers individually identifying a plurality of manufactured products in association with recycle information. This embodiment also comprises receiving from a computer system of the recycle facility a plurality of product identifiers of respective retrieved used products at the recycle facility. The computer system of the recycle facility comprises a reader for reading machine-readable elements in or on said respective retrieved used products in order to obtain said plurality of product identifiers comprised by the respective machine-readable elements. Such a reader may be embodied as a mobile phone, e.g. a smart phone having stored instructions which, when executed by a processor of the mobile phone, cause the mobile phone to read a machine-readable element. The stored instructions may be associated with and/or executed by an application installed on the mobile phone. This embodiment further comprises, for each received product identifier, accessing the database to determine the associated recycle information indicating the recyclable amount of the raw material that is obtained by recycling the product. This embodiment further comprises, on the basis of the determined recycle information for each received product identifier, determining the total recyclable amount of the raw material.

One aspect of this disclosure relates to a computer comprising a computer readable storage medium having computer readable program code embodied therewith, and a processor, preferably a microprocessor, coupled to the computer readable storage medium, wherein responsive to executing the computer readable program code, the processor is configured to perform a number of steps. One step comprises obtaining recycle information indicating a recyclable amount of the raw material that is obtained by recycling a product of said at least one type. Another step comprises, based on the recycle information, determining for a number of used products of said at least one type, which used products are input into a recycling process, a total recyclable amount of the raw material. Another step comprises, based on the total recyclable amount and based on a required amount of the raw material required as input into the manufacturing process, determining a supplementary amount of the raw material to be input into the manufacturing process. Another step comprises outputting the determined supplementary amount of the raw material to be input into the manufacturing process. Then, a conveyer system may, based on this output, provide the determined supplementary amount as input into the manufacturing process.

It should be appreciated that any of the steps comprising receiving information or processing information or transmitting information, e.g. transmitting control information for controlling a physical entity such as a conveyer belt, may be performed by a data processing system as described herein. In particular, the step of providing the determined supplementary amount of raw material may be performed by the data processing system by controlling a conveyer system for providing raw material as input into the manufacturing process.

One aspect of this disclosure relates to a computer program or suite of computer programs comprising at least one software code portion or a computer program product storing at least one software code portion, the software code portion, when run on a computer system, being configured for executing one or more of the steps of the methods as described herein.

One aspect of this disclosure relates to a non-transitory computer-readable storage medium storing at least one software code portion, the software code portion, when executed or processed by a computer, is configured to perform one or more of the steps of the methods as described herein.

One distinct aspect of this disclosure relates to a method for controlling an environmental impact associated with a manufacturing process for manufacturing at least one type of product. This method comprises, for each manufactured product of a plurality of manufactured products of said at least one type, based on location information indicating at least one geographical location of the product between manufacture of the product and retrieval of the product at a recycle facility, and based on an amount of recycled material used for manufacturing each product, determining an environmental impact of the product, such as an environmental cost indicator (ECI). This method further comprises determining that the environmental impact for at least one product exceeds a predetermined threshold value. In an example, the embodiment comprises determining an average environmental impact for a plurality of products and determining that this average environmental impact exceeds a predetermined threshold value. The method further comprises, based on said determination, performing at least one of the following steps for reducing an environmental impact associated with the products of said at least one type:
- increasing an amount of recycled material used as input into the manufacturing process, e.g. by increasing an amount of externally sourced recycled raw material that is provided as at least part of said supplementary amount;
- decreasing a distance between the manufacturing process and said at least one geographical location;
- decreasing a distance between said at least one geographical location and the recycling process;
- decreasing a distance between the recycling process and manufacturing process;
- increasing an amount of waste material, which is not suitable for use in the manufacturing process, that is provided as raw material input for one or more other manufacturing processes;
- increasing a number of products that, after they have served their main purpose, yet before they are recycled, are provided to one or more third parties for use of the products for one or more other purposes.

As will be appreciated by one skilled in the art, aspects of the present invention may be embodied as a system, a method or a computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Functions described in this disclosure may be implemented as an algorithm executed by a processor/microprocessor of a computer. Furthermore, aspects of the present invention may take the form of a computer program product embodied in one or more computer readable medium(s) having computer readable program code embodied, e.g., stored, thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples of a computer readable storage medium may include, but are not limited to, the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of the present invention, a computer readable storage medium may be any tangible medium that can contain, or store, a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber, cable, RF, etc., or any suitable combination of the foregoing. Computer program code for carrying out operations for aspects of the present invention may be written in any combination of one or more programming languages, including an object oriented programming language such as Java(TM), Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer, or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present invention are described below with reference to flowchart illustrations and/or block diagrams of methods, apparatus (systems), and computer program products according to embodiments of the present invention. It will be understood that each block of the flowchart illustrations and/or block diagrams, and combinations of blocks in the flowchart illustrations and/or block diagrams, can be implemented by computer program instructions. These computer program instructions may be provided to a processor, in particular a microprocessor or a central processing unit (CPU), of a general purpose computer, special purpose computer, or other programmable data processing apparatus to produce a machine, such that the instructions, which execute via the processor of the computer, other programmable data processing apparatus, or other devices create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

The flowchart and block diagrams in the figures illustrate the architecture, functionality, and operation of possible implementations of systems, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the blocks may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions.

Moreover, a computer program for carrying out the methods described herein, as well as a non-transitory computer readable storage-medium storing the computer program are provided.

Elements and aspects discussed for or in relation with a particular embodiment may be suitably combined with elements and aspects of other embodiments, unless explicitly stated otherwise. Embodiments of the present invention will be further illustrated with reference to the attached drawings, which schematically will show embodiments according to the invention. It will be understood that the present invention is not in any way restricted to these specific embodiments.

### BRIEF DESCRIPTION OF THE DRAWINGS

Aspects of the invention will be explained in greater detail by reference to exemplary embodiments shown in the drawings, in which:
FIG. 1A illustrates a system wherein methods and computers according to respective embodiments may be utilized;
FIG. 1B illustrates recycle information according to one embodiment;
FIG. 2 illustrates how consumption information may be used for predicting an amount of recycled raw material at a future time;
FIG. 3 illustrates for a plurality of time periods the required amounts of raw materials;
Fig. 4 illustrates a recycling process for obtaining plastic material from used plastic products;
FIG. 5 depicts a data processing system according to one embodiment.

### DETAILED DESCRIPTION OF THE DRAWINGS

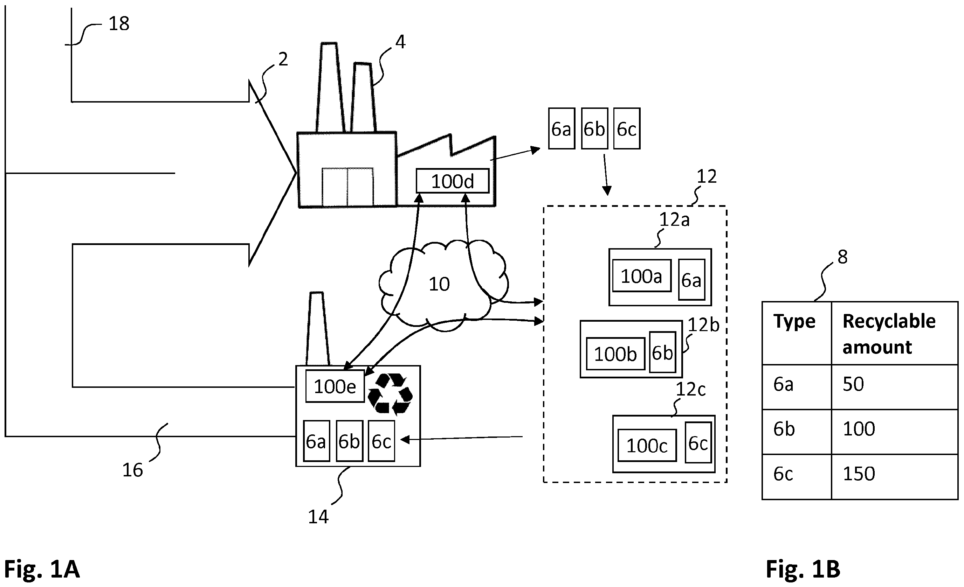

Fig. 1 illustrates a system wherein the methods disclosed herein may be utilized. Fig. 1 in particular illustrates a data processing system that is configured to perform one or more steps of the methods as described herein. Any of the depicted data processing systems 100a, 100b, 100c, 100d, 100e may be configured to perform one or more steps of the methods as described herein.

Manufacturing process 4 outputs products 6a, 6b, 6c that are shipped to geographical locations 12, in particular to geographical locations 12a, 12b and 12c, where they are consumed. After they have been fully consumed, the products are retrieved and shipped to recycling facility 14, where a recycling process is performed. The obtained recycled material 16 is input again, together with supplementary raw material 18, into the manufacturing process 4 and so the cycle continues.

Data processing systems 100a, 100b and 100c are data processing systems respectively associated with geographical locations 12a, 12b and 12c. The geographical locations may be locations where the product is consumed, such as a bar, hotel, restaurant. Data processing system 100d is associated with the manufacturing process, and is for example a computer system installed at factory 4. Data processing system 100d may be configured to control the manufacturing process, in particular to control a conveyer system for inputting raw material into the manufacturing process. Data processing system 100e is associated with the recycling process and is for example a computer system installed at the recycling facility 14. Each of the above mentioned data processing systems may be connected to each other for exchanging information, for example via the internet 10. In another example (not shown) each of the above mentioned data processing systems may be connected to a central server.

The raw materials input into the manufacturing process may comprise plastics, such as thermoplastics, e.g. polyethylene terephthalate (PET), polypropylene (PP), polyamide (PA), polyethylene (PE). The manufacturing process outputs at least one type of product. Fig. 1A shows that the manufacturing process 4 outputs three products 6a, 6b and 6c. In an example, the three products are of the same type in the sense that they are identical. In the context of this disclosure, two products may be understood to be of the same type if the amount of raw material that can be obtained from them by recycling is equal.

In an embodiment, each of the at least one type of product comprises a food container, such as a liquid food container, such as a plastic keg. In the example as depicted, products 6a, 6b and 6c are different types of a food containers, in particular a small, medium and large plastic keg respectively.

Once the products 6a, 6b and 6c have been manufactured, typically they are shipped to one or more geographical locations 12, where the products are consumed. In the case of plastic kegs, consuming the product may relate to removing food, such as beer or wine, from the food container so that it can be served to end-consumers.

After the products 6a, 6b, 6c have been totally consumed, they may be retrieved and shipped to a recycling facility 14, where they are input into a recycling process. At the recycling process, the products may be registered. To illustrate, the products may be counted when they arrive at the recycling facility and it may be registered, for example by data processing system 100e, that one small keg 6a, one medium keg 6b and one large keg 6c have been received at recycle facility 14. This information may then be transmitted from data processing system 100e to data processing system 100d that is associated with the manufacturing process.

Preferably, each product comprises a machine-readable element, such as an RFID tag, barcode or a watermark that can be recognized by a computer, that comprises information that is relatable to recycle information of the product. Such computer may also be configured to read a logo, e.g. in the sense that the computer has an image of the logo stored in a data storage and matches a read product's logo with the pre-stored logo and, based on this matching, identifies the product. A logo may be a product or company logo that is applied onto the product. In such case, the logo may be understood to be the machine-readable element.

An example of information that is relatable to recycle information of the product, is a type identifier indicating the type of product. The type of product may namely determine the amount of raw material that is obtained when the product is recycled. To illustrate, a machine-readable element of plastic keg 6a may indicate that it is a small plastic keg. Furthermore, each element may comprise a product identifier that individually identifies the product. The machine-readable element allows each incoming product at the recycle facility to simply be scanned upon which the data processing system 100e automatically registers the product.

The recycling process may yield a recycled amount of raw material 16 that can be input into the manufacturing process 4 again for manufacturing new products of the same types as products 6a, 6b and 6c.

Fig. 1B illustrates recycle information 8 that may be stored on any of the data processing systems 100, e.g. on data processing system 100d associated with the manufacturing process 4. The recycle information indicates per product type an amount of raw material that is obtained by recycling that type of product. Fig. 1B shows that the recycle information 8 indicates that for product of type 6a, an amount of 50 (arbitrary unites) can be obtained by recycling, for a product of type 6b an amount of 100 and for a product of type 6c an amount of 150. Recycle information 8 in this depicted example shows the recyclable amount for one type of raw material, e.g. plastic. However, recycle information 8 may indicate for several types of raw material how much can be obtained by recycling a type of product. Recycle information 8 may further indicate that for product of type 6a an amount of metal can be obtained by recycling the product.

The manufacturer is typically well-aware of the materials used for manufacturing his product and also how much of these materials can be obtained by recycling the product. In one example, determining the recycle information may thus comprise the data processing system 100d receiving input from the manufacturer indicative of the recycle information and the data processing system 100d storing the recycle information in a data storage.

Data processing system 100d may receive from data processing system 100e a number of products that have been registered at the recycling facility 14, which information it may store in a data storage. Based on the obtained recycle information and on the received number of products that are input into the recycling process 14, the data processing system can determine a total recyclable amount that is output from the recycling process at some point in time. This determination may involve multiplying the number of products of a particular type with the amount of raw material that is obtained by recycling one such product. In the example shown in Fig. 1A, products, 6a, 6b and 6c are registered at the recycling process. Upon this registration, the total recyclable amount for this batch may then be determined to be 1x50 + 1x100 + 1x150 = 300.

Typically, the time between the used products being input into recycling process 14 and the recycled amount arriving at the factory 4 is known, which allows to determine the point in time on which the recycled amount can be input again into the manufacturing process 4. If the recycled amount is sufficient for the manufacturing process for some time period of production, e.g. a week, then no supplementary amount is required for that time period. However, if the recycled amount is not sufficient for that time period, then a supplementary amount is required for that period in order to ensure that production can continue as desired. The supplementary amount for a particular time period can be determined by subtracting the total recyclable amount that is available as input for the manufacturing process during the time period from the required amount for the time period. Then, the method may comprise providing the supplementary amount during the time period. Thus, it should be understood that determining a total recyclable amount 16 may comprise determining a total recyclable amount that is available as input into the manufacturing process at a future time and determining the supplementary amount may comprise determining the supplementary amount for said future time.

Each of the data processing systems 100a, 100b, 100c may transmit location information to system 100d that a particular product is at their respective locations 12a, 12b, 12c. In one example, wherein the products are plastic kegs, upon installation of such a keg at location 12a, the data processing system 100a may transmit a message to data processing system 100d indicating that the keg is currently at location 12a.

In yet another example, once product 12b has been totally consumed, the data processing system 12b transmits a message to data processing system 100e of the recycling facility that the product can be picked up at location 12b for shipment to the recycling facility. Then, based on a travel distance and/or travel time between location 12b and the recycling facility 14, the arrival time of used product 6b at the recycling process can be forecast. This allows to more accurately forecast how many retrieved used products will be available at future times as input for the recycling process, which in turn allows to more accurately determine how much recycled raw material will be available as input into the manufacturing process at future times. The more accurate the available recycled raw material can be forecast, and the longer ahead the availability of raw material can be predicted, the smaller a raw material buffer needs to be. After all, the longer ahead fluctuations of (part of) the raw material availability can be predicted, the more time a manufacturer has to anticipate these known fluctuations and to ensure that enough supplementary raw material will be available. If fluctuations in the raw material stream are only known shortly before they occur, there may not be enough time to gather sufficient supplementary raw material. Hence, if fluctuations are only known shortly beforehand, a large raw material buffer is required in order to prevent raw material deficits.

Preferably, after a product has been fully consumed, instead of being shipped directly to recycling facility 14, the product is reused for a different purpose, which may be referred to as a second life of the product. An example of such reuse for a different purpose, in case of plastic kegs, is that the plastic kegs are reused for collecting used coffee grounds at restaurants or bars. Once the plastic keg has been totally consumed in the sense that it no longer contains any liquid food, the plastic keg may be used as a container for used coffee grounds. The plastic keg, after being totally consumed, may be picked up by a coffee shop that uses it to collect coffee grounds. Once the keg arrives at the coffee shop, its machine-readable element may be scanned in order to register that the keg has entered its second life as used coffee ground container. Once the plastic keg is completely filled with coffee ground, the coffee bar owner may again scan the machine-readable element of the keg in order to register that the keg is ready to be shipped to a facility that for example uses the coffee ground for composting purposes. At this composting facility, again the keg may be scanned in order to register that the keg has ended its second life and is ready to be shipped to the recycling facility. Of course, this example is only one of many possibilities of the plastic keg serving a further purpose after it has been fully consumed. Additionally or alternatively, a plastic keg in a further life can be used for the collection of batteries. Of course, after the second life, a third life, fourth life, or even further life may follow. Such reuse of a product ensures that the product continues to be a useful product. Herewith the efficiency with which resources are used to manufacture the product is increased, because more societal value is obtained from the product without increasing the resources that are used to manufacture the product.

To be able to predict the amount of recycled raw material for even longer periods, in one embodiment, the method comprises receiving for each product consumption information indicating an extent to which the product has been consumed. To illustrate, at the geographical locations 12, a plastic keg may be positioned on a scale so that the weight of the keg and content can be repeatedly measured. The measured values may be transmitted by a data processing system of the geographical location to data processing systems 100e or 100d, based on which the time can be predicted at which the product will be fully consumed.

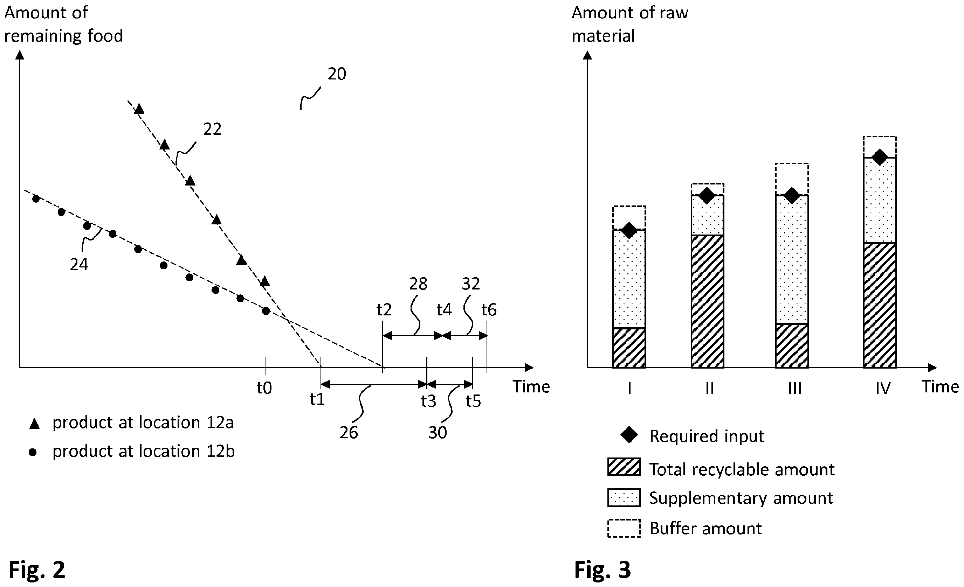

FIG. 2 is a graph wherein consumption information is plotted against time for product 6a (the triangles) and for product 6b (the dots). In particular, the graph may be understood to show extended consumption information because for a plurality of times an extent to which the products have been consumed is indicated. In this example, a data processing system weekly receives consumption information for these products indicating an extent to which they have been consumed. In one embodiment, the products are kegs and the extent of consumption is measured by measuring the weight of the keg and contents. The plotted values are weights as measured by a scale at the respective geographic locations 12a and 12b.

At level 20 a product has not yet been consumed. At the level of the horizontal axis, a product may be understood to have been fully consumed. Fig. 2 shows that at present time t0, neither product 6a nor 6b have been fully consumed yet. Based on previous consumption information, the time at which the products will be fully consumed can be predicted, for example by determining for each product a rate 22, 24, at which the product is consumed. For product 6a, end-of-consumption will be around t1, whereas for product 6b, end-of consumption will be around t2.

Then, for each product, the time at which the product will arrive at the recycling process can be determined, for example based on the geographical location where the product is being consumed, in particular a travel time and/or distance between the geographical location and the recycling process. After product 6a has been fully consumed, transportation of the product from geographical location 12a to recycling process 14 will take a time period 26. After product 6b has been fully consumed, transportation of the product from geographical location 12b to the recycling process will take a time period 28. Furthermore, based on a recycling time and optionally based on a travel time between recycling facility 14 and factory 4, a time period can be determined between a product arriving at the recycling process and recycled raw material of that product being available at the factory 4. For product 6a this time period is indicated by 30 and for product 6b by 32. Hence, the graph shows that the future time on which recycled raw material from products 6a and 6b becomes available as input into the manufacturing process can be determined. For product 6a this future time is indicated by t5 and for product 6b by t6.

FIG. 3 illustrates for four time periods, which may be days, weeks, years, et cetera, raw material requirements for a manufacturing process. A diamond indicates the required amount of raw material for a particular time period. Furthermore, a dashed block indicates the total recyclable amount of raw material that will be available for that time period. This amount can be determined as described herein, for example by registering how many used products are present at a recycling process and forecasting the recycled amount of raw material that will be output from this recycling process and/or for example by forecasting how many used products will be present at a recycling process based on extended consumption information as described herein and then forecasting the recycled amount of raw material. A dotted block indicates the supplementary amount of raw material that is to be input into the manufacturing process in addition to the recycled amount. As a side note, the graph relates to one particular raw material, for example to one particular type of plastic. Typically, the manufacturing process requires various raw materials, such as various types of plastic material, as input, and the methods described herein for providing a raw material may be executed for every type of raw material separately. A white block with a dashed contour indicates a buffer amount of raw material. The buffer amount's main function is to absorb any unexpected fluctuation in the availability of supplementary raw material, which may be sourced externally. Of course, the buffer amount can also absorb unexpected fluctuations in the total recyclable amount, however, unexpected fluctuations typically occur less frequently and are typically smaller. For each period, the target size of a stock of raw material out of which the supplementary raw material is taken, may be understood to be the sum of the supplementary amount and the buffer amount of raw material.

In this example, the buffer amount of raw material is selected in dependence of the supplementary amount of raw material, because this material may be sourced externally and its availability and quality may fluctuate. In particular, the buffer amount is selected to be 25% of the supplementary amount. As shown, for periods II and III, the amount required as input into the manufacturing process is the same. However, because the supplementary amount of raw material is lower in period II, less buffer amount is required and thus the target size of the stock of raw material is also lower. It should be noted that if the total recyclable amount of raw material that will be available for these periods would not be determined as described herein, it would not be possible to distinguish in advance between the two raw material input streams 16 and 18 depicted in FIG. 1. Then, it would not be possible to account for the fact that part of the raw material stream, namely stream 16, does not, or at least to a lesser extent, fluctuate unexpectedly, which would reduce the amount of required buffer material.

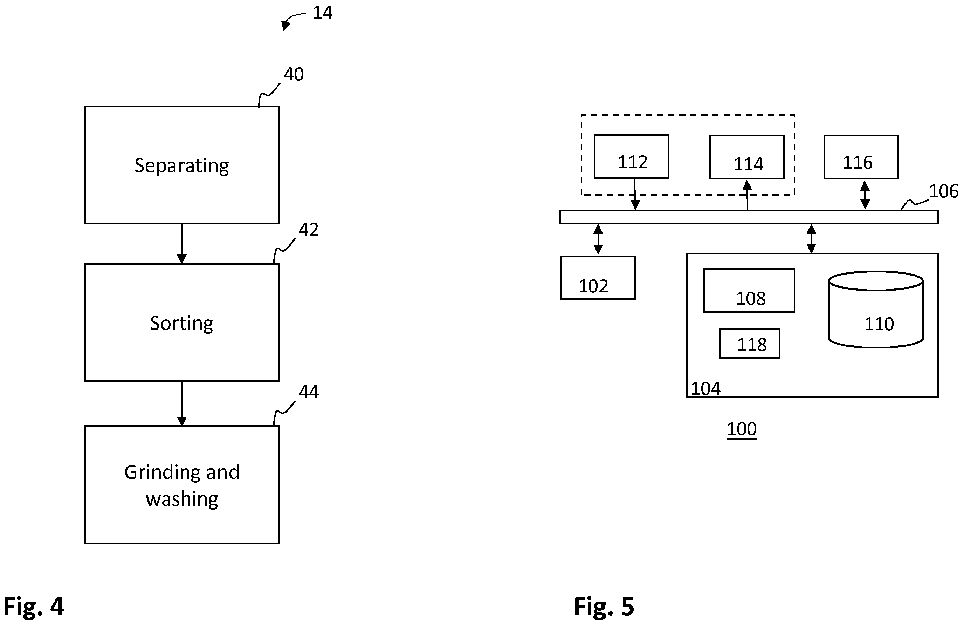

FIG. 4 illustrates a recycling process 14 for recycling plastic materials from used plastic products, such as used plastic containers for liquids, according to an embodiment. The exemplary recycling process 14 comprises three steps 40, 42, 44.

The goal of step 40 is to separate any different plastic materials that are present in the product that is to be recycled. In the context of this disclosure different plastic materials may be understood to be different types of raw material. Ideally, after the different plastic materials have been separated, no two different materials are connected to each other anymore. However, preferably, the parts are kept as big as possible.

Step 40 may comprise inducing the desired separation by striking the kegs using impact reactors known in the art. In such reactors, when in use, a rotating steel beam or flinging heavy steel balls hit the kegs in a closed chamber. Additionally or alternatively, this step may comprise slowly running shredder devices having dedicated cutting systems. Additionally or alternatively, step 40 comprises cutting the product in a hydraulic press using dedicated dyes and knives.

The goal of step 42 is to sort the different plastic mono materials, for example by accumulating each kind of plastic in a separate bin, ready to be processed further. Step 42 may comprise guiding the material through a series of different separating machines. In one example, a first sorting step comprises using ballistic separator machines known in the art which are configured to separate light fractions from heavier fractions, e.g. thin foils from heavier, more "3d", chunks of plastics. Advantageously, such a ballistic separator can also remove heavy contaminants like sand and stone from the plastic. Electromagnets and eddy current techniques may also be employed to remove metals from the plastics. In a second sorting step, the plastic parts may be guided through a series of colour and/or NIR (near infrared) sorters. These machines are respectively configured to detect the colour and/or chemical composition of the plastic based on the analysis of reflected light and infrared light from the plastic parts. Based on the recognized colour and/or composition, the plastic chunks may be guided in different directions, for example using air jets, on a separate conveyor belt for each kind of plastic. In a third sorting step, a sink float separator may be used to separate plastics floating on water from heavier, sinking plastics. Besides the above described sorting methods/machines a series of other methods may be used, such as advanced methods based on gravity differences, electrostatic charging or surface tension differences.

Step 44 comprises grinding and washing the plastic materials obtained in step 42 to remove any dirt, label, glue and/or beverage rests attached to the plastic. Preferably, the materials are grinded to a particle size of approx. 8 mm. Washing may be performed using hot caustic soda solutions in a closed circuit system. After the washing cycle, the materials are flushed by fresh water and some of the plastics are then ready to be used as plastic raw materials again, i.e. as input into the manufacturing process. Other plastics (e.g. PET) may need next steps like solid state polymerisation (SSP) and regranulation to realize a necessary upgrading of the material before it can be used again.

Fig. 5 depicts a block diagram illustrating an exemplary data processing system that may be used in a computing system as described with reference to Fig. 2.

As shown in Fig. 5, the data processing system 100 may include at least one processor 102 coupled to memory elements 104 through a system bus 106. As such, the data processing system may store program code within memory elements 104. Further, the processor 102 may execute the program code accessed from the memory elements 104 via a system bus 106. In one aspect, the data processing system may be implemented as a computer that is suitable for storing and/or executing program code. It should be appreciated, however, that the data processing system 100 may be implemented in the form of any system including a processor and a memory that is capable of performing the functions described within this specification.

The memory elements 104 may include one or more physical memory devices such as, for example, local memory 108 and one or more bulk storage devices 110. The local memory may refer to random access memory or other non-persistent memory device(s) generally used during actual execution of the program code. A bulk storage device may be implemented as a hard drive or other persistent data storage device. The processing system 100 may also include one or more cache memories (not shown) that provide temporary storage of at least some program code in order to reduce the number of times program code must be retrieved from the bulk storage device 110 during execution.

Input/output (I/O) devices depicted as an input device 112 and an output device 114 optionally can be coupled to the data processing system. Examples of input devices may include, but are not limited to, a keyboard, a pointing device such as a mouse, or the like. Further examples of an input device is a reader device that is configured to read the machine-readable elements on the products as described herein, sensor that is configured to measure the extent of consumption of a product, such a weight sensor that is configured to measure the weight of a product. Examples of output devices may include, but are not limited to, a monitor or a display, speakers, or the like. Input and/or output devices may be coupled to the data processing system either directly or through intervening I/O controllers.

In an embodiment, the input and the output devices may be implemented as a combined input/output device (illustrated in FIG. 5 with a dashed line surrounding the input device 112 and the output device 114). An example of such a combined device is a touch sensitive display, also sometimes referred to as a "touch screen display" or simply "touch screen". In such an embodiment, input to the device may be provided by a movement of a physical object, such as e.g. a stylus or a finger of a user, on or near the touch screen display.

A network adapter 116 may also be coupled to the data processing system to enable it to become coupled to other systems, computer systems, remote network devices, and/or remote storage devices through intervening private or public networks. The network adapter may comprise a data receiver for receiving data that is transmitted by said systems, devices and/or networks to the data processing system 100, and a data transmitter for transmitting data from the data processing system 100 to said systems, devices and/or networks. The transmitted data for example relates to consumption information and/or a number of product that have been received at the recycling process. Modems, cable modems, and Ethernet cards are examples of different types of network adapter that may be used with the data processing system 100.

As pictured in FIG. 5, the memory elements 104 may store an application 118. In various embodiments, the application 118 may be stored in the local memory 108, the one or more bulk storage devices 110, or apart from the local memory and the bulk storage devices. It should be appreciated that the data processing system 100 may further execute an operating system (not shown in FIG. 5) that can facilitate execution of the application 118. The application 118, being implemented in the form of executable program code, can be executed by the data processing system 100, e.g., by the processor 102. Responsive to executing the application, the data processing system 100 may be configured to perform one or more operations or method steps described herein.

The data processing system 100 may represent any of the data processing systems described herein.

In another aspect, the data processing system 100 may represent a client data processing system. In that case, the application 118 may represent a client application that, when executed, configures the data processing system 100 to perform the various functions described herein with reference to a "client". Examples of a client can include, but are not limited to, a personal computer, a portable computer, a mobile phone, or the like.

In yet another aspect, the data processing system 100 may represent a server. For example, the data processing system may represent an (HTTP) server, in which case the application 118, when executed, may configure the data processing system to perform (HTTP) server operations.

Various embodiments of the invention may be implemented as a program product for use with a computer system, where the program(s) of the program product define functions of the embodiments (including the methods described herein). In one embodiment, the program(s) can be contained on a variety of non-transitory computer-readable storage media, where, as used herein, the expression "non-transitory computer readable storage media" comprises all computer-readable media, with the sole exception being a transitory, propagating signal. In another embodiment, the program(s) can be contained on a variety of transitory computer-readable storage media. Illustrative computer-readable storage media include, but are not limited to: (i) non-writable storage media (e.g., read-only memory devices within a computer such as CD-ROM disks readable by a CD-ROM drive, ROM chips or any type of solid-state non-volatile semiconductor memory) on which information is permanently stored; and (ii) writable storage media (e.g., flash memory, floppy disks within a diskette drive or hard-disk drive or any type of solid-state random-access semiconductor memory) on which alterable information is stored. The computer program may be run on the processor 102 described herein.

The terminology used herein is for the purpose of describing particular embodiments only and is not intended to be limiting of the invention. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or step plus function elements in the claims below are intended to include any structure, material, or act for performing the function in combination with other claimed elements as specifically claimed. The description of embodiments of the present invention has been presented for purposes of illustration, but is not intended to be exhaustive or limited to the implementations in the form disclosed. Many modifications and variations will be apparent to those of ordinary skill in the art without departing from the scope and spirit of the present invention. The embodiments were chosen and described in order to best explain the principles and some practical applications of the present invention, and to enable others of ordinary skill in the art to understand the present invention for various embodiments with various modifications as are suited to the particular use contemplated.

## Claims

1. A method for providing plastic raw material for input into a manufacturing process for manufacturing plastic containers for liquids, said plastic containers having a liquid holding capacity between 8 and 51 liters, the method comprising
based on recycle information indicating an amount of plastic that is obtained by recycling a plastic container of a first type produced in said manufacturing process, determining for a number of used plastic containers of said first type, which are input into a recycling process, a total recyclable amount of plastic material,
based on the total recyclable amount and based on a required amount of plastic material required as input into the manufacturing process, determining a supplementary amount of plastic material to be input into the manufacturing process,
providing the determined supplementary amount of plastic material as input into the manufacturing process.

2. The method according to claim 1, comprising
based on time information indicative of a time duration of the recycling process, determining for the number of used plastic containers at what time the total recyclable amount of plastic material will be available as input into the manufacturing process, and
based on the determined total recyclable amount of plastic material associated with said determined time and based on the required amount of the plastic material required at said determined time as input into the manufacturing process, determining the supplementary amount for said determined time,
providing the determined supplementary amount of plastic material at said determined time.

3. The method according to claim 1 or 2, wherein
the supplementary amount of plastic material is provided from a stock of plastic raw material, the method further comprising
based on the determined supplementary amount, determining a target size of the stock of plastic raw material, e.g. determining the target size of the stock for said determined time at which the total recyclable amount will be available as input into the manufacturing process.

4. The method according to claim 1, 2 or 3, further comprising
recycling said number of used plastic containers in order to obtain the total recyclable amount of plastic material, and
providing the recycled amount of plastic material as input into the manufacturing process.

5. The method according to one or more of the preceding claims, wherein the plastic material comprises a thermoplastic, such as polyethylene terephthalate (PET), polypropylene (PP), polyamide (PA), polyethylene (PE).

6. The method according to one or more of the preceding claims, comprising
based on the determined supplementary amount of plastic raw material, controlling a raw material input device, such as a pneumatic conveyer system, to provide the supplementary amount of plastic material as input to the manufacturing process.

7. The method according to one or more of the preceding claims, wherein determining the supplementary amount of plastic material comprises
registering at the recycling process, e.g. at a recycling facility, a number of retrieved used plastic containers of the first type.

8. The method according to one or more of the preceding claims, wherein
each manufactured plastic container of a plurality of manufactured plastic containers comprises a machine-readable element comprising information that is relatable to the recycle information of the plastic container, such as a type identifier indicating the type of plastic container.

9. The method according to one or more of the preceding claims, further comprising
for each manufactured plastic container of a plurality of manufactured plastic containers of the first type, receiving location information indicating at least one geographical location of the plastic container between manufacture of the plastic container and retrieval of the plastic container at a recycle facility.

10. The method according to the preceding claim, comprising
determining the number of used plastic containers of the first type, for which number the total recyclable amount of plastic material is determined, wherein determining this number comprises forecasting the number of used plastic containers of the first type at the recycling process on the basis of said location information received for each plastic container of the plurality of manufactured plastic containers of the first type.

11. The method according to the preceding claim, comprising
for each manufactured plastic container of the plurality of manufactured plastic containers of the first type, receiving consumption information indicating an amount of liquid in the container, and
forecasting a number of used plastic containers of the first type at a recycling process on the basis of said consumption information.

12. The method according to one or more of the preceding claims 9-12, further comprising
for each manufactured plastic container of said plurality of manufactured plastic containers, based on the location information, determining a parameter indicative of an environmental impact, such as an environmental cost indicator (ECI), associated with shipping the plastic container to and/or from the at least one geographical location, and
compensating for the environmental impact.

13. The method according to the preceding claim, wherein determining the environmental impact comprises determining an amount of one or more greenhouse gases emitted as a result of said shipping the plastic container to and/or from the at least one geographical location, and wherein compensating for the environmental impact comprises
compensating for the determined amount of one or more emitted greenhouse gases.

14. The method according to one or more of the preceding claims, comprising
for each manufactured plastic container of said plurality of manufactured plastic containers, based on the location information and based on an amount of recycled material used for manufacturing each plastic container, determining an environmental impact, such as an environmental cost indicator (ECI),
determining that the environmental impact for a plastic container exceeds a predetermined threshold value,
based on said determination, performing at least one of the following steps for reducing an environmental impact associated with the plastic containers of the first type:
- increasing an amount of recycled plastic material used for manufacturing said plastic containers, e.g. by increasing an amount of externally sourced recycled plastic raw material that is provided as at least part of said supplementary amount;
- decreasing a distance between the manufacturing process and said at least one geographical location;
- decreasing a distance between said at least one geographical location and the recycling process;
- decreasing a distance between the recycling process and manufacturing process;
- increasing an amount of waste material, which is not suitable for use in the manufacturing process, that is provided as raw material input for one or more other manufacturing processes;
- increasing a number of plastic containers that, after they have served their main purpose, yet before they are recycled, are provided to one or more third parties for use of the plastic containers for one or more other purposes.

15. A computer comprising a
a computer readable storage medium having computer readable program code embodied therewith, and
a processor, preferably a microprocessor, coupled to the computer readable storage medium, wherein responsive to executing the computer readable program code, the processor is configured to perform the steps of
based on recycle information indicating an amount of plastic that is obtained by recycling a plastic container of a first type produced in a manufacturing process, determining for a number of used plastic containers of said first type, which are input into a recycling process, a total recyclable amount of plastic,
based on the total recyclable amount and based on a required amount of plastic required as input into the manufacturing process, determining a supplementary amount of plastic to be input into the manufacturing process,
outputting the determined supplementary amount of plastic to be input into the manufacturing process.
